# EUROPÄISCHE PATENTSCHRIFT

(11) **EP 1 375 243 B1**
(45) Veröffentlichungstag und Bekanntmachung des Hinweises auf die Patenterteilung: **16.09.2009**
(21) Anmeldenummer: 03013898.6
(22) Anmeldetag: 20.06.2003
(51) Int. Cl.: B60N 2/36, B60N 2/30

(54) **Fahrzeug mit faltbarem Rücksitz**
Vehicle with foldable rear seat
Véhicule avec siège arrière pliant

(30) Priorität: 26.06.2002 DE 10228466
(43) Veröffentlichungstag der Anmeldung: 02.01.2004
(73) Patentinhaber: Bayerische Motoren Werke Aktiengesellschaft, 80809 München (DE)
(72) Erfinder: Kamphaus, Reinhard, 85049 Ingoldstadt (DE); Rank, Dora Ute, 82515 Wolfratshausen (DE); Geus, Jürgen, 81667 München (DE)

(56) Entgegenhaltungen:
- WO-A-99/08894
- DE-A1- 10 055 205
- DE-A1- 19 616 070
- DE-C1- 19 962 424
- US-A- 5 588 707
- US-B1- 6 398 291

## Beschreibung

Die Erfindung betrifft ein Fahrzeug gemäß dem Oberbegriff des Anspruchs 1.

Es sind bereits Fahrzeuge mit Rücksitzen bekannt, bei denen zur Vergrößerung des Kofferraums oder Laderaums eine Rücksitzlehne des betreffenden Sitzes aus einer Sitzposition in eine in etwa waagrechte Ladeposition klappbar ist.

Ferner sind Fahrzeuge bekannt, bei denen zwischen einer Unterseite einer Sitzfläche eines Rücksitzes und einem Boden des Fahrzeuges ein Zwischenraum oder ein Stauraum vorgesehen ist. Zur Schaffung einer Ladefläche kann es erforderlich sein, zunächst die Rückenlehne des Rücksitzes umzuklappen und in einem weiteren Bedienschritt die Rückenlehne zusammen mit der Sitzfläche über eine geeignete Vorrichtung in den vorhandenen Stauraum abzusenken.

Aus der DE 100 55 205 A ist ein Rücksitz-Mittelteil für einen Personenkraftwagen bekannt, das ein Sitzteil und ein Rückenlehnenteil aufweist. Ein zweiarmiges Hebelelement einer Verstellvorrichtung ist um eine fahrzeugfeste mittige Achse verschwenkbar. Die fahrzeugfeste Achse ist hinter dem Sitzteil und unter dem Rückenlehnenteil vorgesehen. Durch das Drehen des Hebelelementes erfolgt über weitere Hebel eine Absenkung des Sitzteils und eine Verschiebung des Sitzteils nach vorne. Ein unteres Ende der Rückenlehne ist um ein oberes Ende eines Kopplungshebels verschwenkbar. Durch eine Verbindung eines unteren Endes des Kopplungshebels mit dem zweiarmigen Hebelelement wird bei der Verschwenkung der Rückenlehne nach unten der Kopplungshebel durch den zweiarmigen Hebel nach oben angehoben. Dadurch wird auch das untere Ende der Rückenlehne angehoben. Durch eine entsprechende Auslegung bildet die Rückseite der Rückenlehne im zusammengeklappten Zustand eine ebene Ladefläche mit dem an den Rücksitz sich anschließenden Kofferraumboden. Aus dieser zusammengeklappten Position ist der Sitz wieder in eine Sitzposition zurück verschwenkbar.

Aufgabe der Erfindung ist es, ein Fahrzeug zu schaffen, bei dem das Umstellen eines Rücksitzes von einer Sitzposition in eine Ladeposition und zurück vereinfacht ist.

Diese Aufgabe wird durch die Merkmale des Anspruchs 1 gelöst.

Bei dem erfindungsgemäßen Sitz erfolgt gleichzeitig mit dem Verschwenken der Rückenlehne eine Verstellung der Sitzfläche, indem die Rückenlehne über eine Verzahnung mit einer Führung verbunden ist, die am Boden des Fahrzeuges angeordnet ist. Dadurch wird vorteilhafterweise zumindest das hintere Ende der Sitzfläche zusammen mit der Rückenlehne entlang der Führung bewegt.

In einer vorteilhaften Ausführungsform ist die Verbindung der Rückenlehne mit der am Fahrzeugboden befindlichen Führung so ausgebildet, dass der Sitz im umgeklappten Zustand der Rückenlehne eine maximale Raumausnutzung ergibt, so dass ein Zwischenraum zwischen dem Fahrzeugboden und einer Unterseite der Sitzfläche minimiert ist.

In einer weiteren, vorteilhaften Ausführungsform ist die Verbindung der Rückenlehne mit der am Fahrzeugboden befindlichen Führung so ausgestaltet, dass eine Rückseite der Rückenlehne eine ebene Ladefläche mit einem an den Rücksitz sich anschließenden Ladeboden ergibt.

Vorteilhafterweise wird beim Umklappen der Rückenlehne in eine Ladeflächenposition ein vorderes Ende der Sitzfläche über eine Führung aus einer erhöhten Sitzposition in eine abgesenkte Ladeposition verstellt.

In der Sitzfunktion der Sitzfläche und der Rückenlehne sind die Sitzfläche und die Rückenlehne des Sitzes durch mindestens eine entsprechende Vorrichtung verriegelt. Beim Verlagern der Rückenlehne und der Sitzfläche in die abgesenkte Ladeposition erfolgt eine Entriegelung zumindest des vorderen Endes der Sitzfläche über eine durch die Bewegung der Rückenlehne gesteuerte Vorrichtung, so dass vorteilhafterweise die Entriegelung zwangsweise erfolgt. Das Verriegeln der Sitzfläche und der Rückenlehne beim Erreichen der Sitzposition erfolgt vorteilhafterweise durch einen Verrastungsvorgang, beispielsweise nach Überwindung einer Federkraft oder durch eine Federkraft-Beaufschlagung oder dergleichen.

Ausführungsformen der Erfindung werden nachstehend anhand der Zeichnungen beispielshalber beschrieben. Dabei zeigen:
- Fig. 1: eine schematische Darstellung einer ersten Ausführungsform eines Sitzes von der Seite, wobei sich eine Sitzfläche und eine Rückenlehne in einer Sitzposition befinden,
- Fig. 2: eine Darstellung entsprechend der Fig. 1, wobei die Rückenlehne teilweise nach vorne umgeklappt und gleichzeitig die Sitzfläche abgesenkt ist,
- Fig. 3: eine Seitenansicht des in der Fig. 1 gezeigten Sitzes, wobei die Rückenlehne vollständig umgeklappt ist und der Sitz sich in einer abgesenkten Position befindet,
- Fig. 4: eine zweite Ausführungsform eines schematisch dargestellten Sitzes in einer Ansicht von der Seite, wobei sich eine Sitzfläche und eine Rückenlehne des Sitzes in einer Sitzposition befinden,
- Fig. 5: eine Zwischenstellung einer teilweise nach vorne umgeklappten Rückenlehne des in der Fig. 4 gezeigten Sitzes, wobei gleichzeitig mit dem Umklappen der Rückenlehne eine Absenkung der Sitzfläche erfolgt und
- Fig. 6: den in der Fig. 4 gezeigten Sitz in einer Ladeposition, in der die Rückseite der Rückenlehne eine Ladefläche bildet, die etwa in der Höhe eines sich an den Sitz anschließenden Ladebodens liegt.

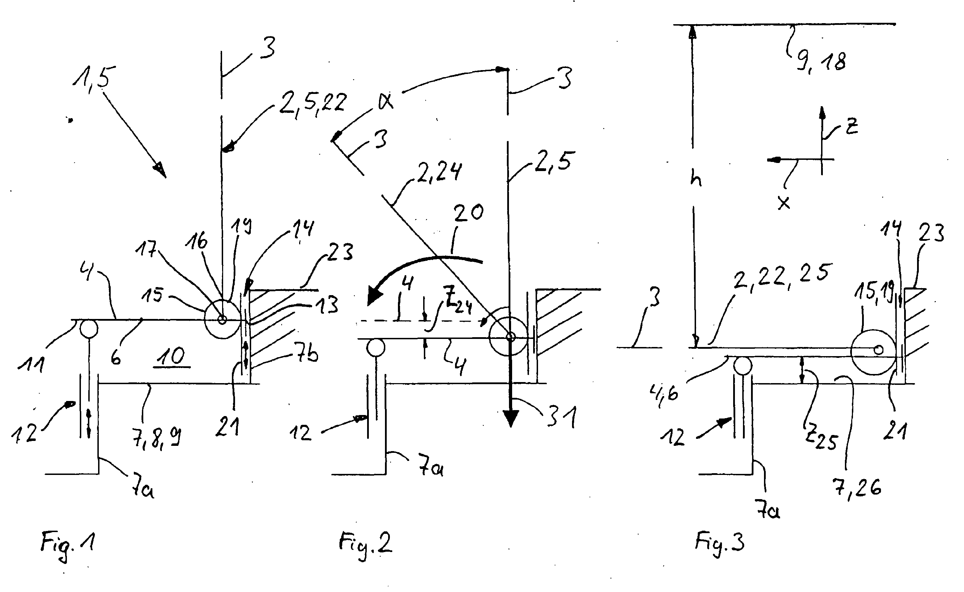

Die Fig. 1 zeigt einen schematisch dargestellten Sitz 1, der eine Rückenlehne 2, eine darauf angeordnete Kopfstütze 3 und eine Sitzfläche 4 aufweist. In der gezeigten Ausführungsform schließt sich an eine Rückseite 22 der Rückenlehne 2 ein Ladeboden 23 an. Die Rückenlehne 2 befindet sich in einer in etwa senkrechten oder aufgeklappten Stellung, die einer Sitzposition 5 entspricht. Zwischen einer Unterseite 6 der Sitzfläche 4 und einem darunter ausgebildeten Bodenblech 7 einer Karosserie 8 eines nicht weiter dargestellten Fahrzeuges 9 ist ein Zwischenraum 10 vorgesehen.

Ein vorderes Ende 11 der Sitzfläche 4 ist über eine erste Führung 12 mit dem Bodenblech 7 verbunden, wobei die erste Führung 12 an einem unteren Abschnitt 7a des Bodenblechs 7 ausgebildet ist. Ein hinteres Ende 13 der Sitzfläche 4 ist über eine zweite Führung 14 an einem oberen Abschnitt 7b des Bodenblechs 7 angeordnet. In der gezeigten Ausführungsform verläuft der untere Abschnitt 7a waagrecht und der obere Abschnitt 7b des Bodenblechs 7 senkrecht.

Die Rückenlehne 2 ist über eine Verstellvorrichtung 15, wie zum Beispiel ein Zahnrad-Getriebe, klappbar mit einem hinteren Ende 13 der Sitzfläche 4 verbunden, wobei die Verstellvorrichtung 15 an einem unteren Ende 16 der Rückenlehne 2 angeordnet ist.

In der Fig. 1 kennzeichnet ein kleiner Kreis die Schwenk- oder Drehachse 17 zwischen der Sitzfläche 4 und der Rückenlehne 2. Die Verstellvorrichtung 15 weist ein drehbares Bauteil 19 auf, das sich entsprechend einer Schwenkbewegung der Rückenlehne 2 gemäß einem Pfeil 20 in der Fig. 2 in Richtung der Sitzfläche 4 und entsprechend zurück mitbewegt und in Eingriff mit einem feststehenden Bauteil 21 steht, das am oberen Abschnitt 7b des Bodenblechs 7 angeordnet ist.

Die Fig. 2 zeigt die Rückenlehne 2 in einer Zwischenposition 24, in der die Rückenlehne 2 um einen Winkel α nach vorne in Richtung der Sitzfläche 4 verschwenkt ist. Gleichzeitig wird mit dem Verschwenken der Rückenlehne 2 die Sitzfläche 4 über die Verstellvorrichtung 15 um eine Strecke z₂₄ abgesenkt.

In der Fig. 3 befindet sich die Rückenlehne 2 in einem völlig umgeklappten Zustand, in der die Rückseite 22 der Rückenlehne 2 als Ladefläche 25 dient. In der Ladeposition 25 ist ein Abstand z₂₅ zwischen der Unterseite 6 der Sitzfläche 4 und einer Oberseite 26 des dazu gegenüberliegenden Bodenbleches 7 minimiert, so dass eine Beladehöhe h zwischen der Rückseite 22 der Rückenlehne 2 und einem Fahrzeugdach 18 maximal ist.

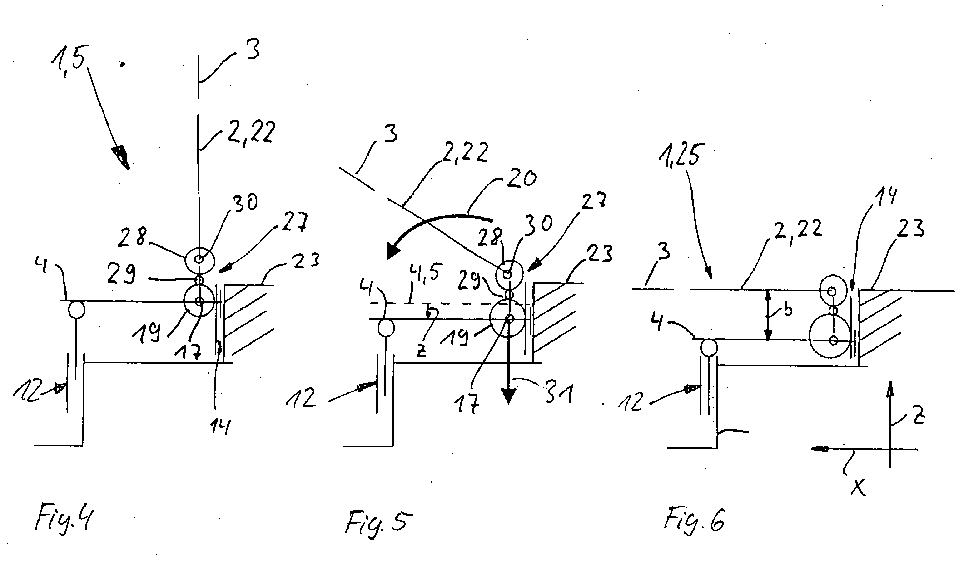

Die Fig. 4, 5 und 6 zeigen eine zweite Ausführungsform, die sich von der in den Fig. 1 bis 3 dargestellten ersten Ausführungsform dadurch unterscheidet, dass eine Verstellvorrichtung 27 vorgesehen ist, die so ausgelegt ist, dass die Rückseite 22 der Rückenlehne 2 in der Ladeposition 25 eine ebene Fläche mit dem sich daran anschließenden Ladeboden 23 bildet. Gleiche Bauteile wie in den Fig. 1 bis 3 sind in den Fig. 4 bis 6 mit den gleichen Bezugszeichen versehen.

In der Fig. 4 befindet sich der Sitz 1 in der Sitzposition 5. Die Verstellvorrichtung 27 weist Zusatzbauteile 28 und 29 auf, die bei der in der Fig. 5 gezeigten Klappbewegung der Rückenlehne 2 nach vorne entsprechend dem Pfeil 20 eine Abwärtsbewegung der Sitzfläche 4 bewirken.

Während in der Ausführungsform der Fig. 1 bis 3 die Schwenkachse 17 in Höhe der Sitzfläche 4 liegt, weist die Ausführungsform der Fig. 4 bis 6 eine weitere, zu der Schwenkachse 17 beabstandete Schwenkachse 30 auf. Aus einem Abstand b in vertikaler Richtung z zwischen den beiden Schwenkachsen 17, 30 ergibt sich der in der Fig. 6 gezeigte Abstand zwischen der Rückenlehne 2 und der Sitzfläche 4. In der Fig. 5 ist durch einen Pfeil 31 die durch die Verstellvorrichtung 27 bewirkte Abwärtsbewegung in z-Richtung symbolisiert.

Ferner ist eine Verriegelungsvorrichtung vorgesehen, durch die die Sitzfläche 4 und die Rückenlehne 2 in der Sitzposition 5 verriegelt ist. Die Verriegelungsvorrichtung wird automatisch über die Verstellvorrichtung 15, 27 beim Umklappen der Rückenlehne 2 entriegelt. Beim Zurückklappen der Rückenlehne 2 aus der Ladeposition 25 in die Sitzposition 5 erfolgt automatisch eine Verriegelung der Rückenlehne 2 und der Sitzfläche 4. Eine derartige Verriegelungsvorrichtung ist aus der DE 102 28 465.2 bekannt.

## Patentansprüche

1. Fahrzeug (9) mit mindestens einem Rücksitz (1), der eine Rückenlehne (2) und eine Sitzfläche (4) aufweist, wobei die Rückenlehne (2) und die Sitzfläche (4) über eine Verstellvorrichtung (15, 27) aus einer Sitzposition (5) in eine Ladeposition (25) und zurück verstellbar sind, wobei eine Rückseite (22) der Rückenlehne (2) als Ladefläche nutzbar ist und wobei zwischen der Sitzfläche (4) und einem Boden (7) einer Karosserie (8) des Fahrzeuges (9) ein Zwischenraum (10) ausgebildet ist,
**dadurch gekennzeichnet, dass** die Rückenlehne (2) über eine Verstellvorrichtung (15) klappbar mit einem hinteren Ende (13) der Sitzfläche (4) verbunden ist, dass die Verstellvorrichtung (15) an einem unteren Ende (16) der Rückenlehne (2) angeordnet ist, dass die Verstellvorrichtung (15, 27) über mindestens ein drehbares Zahnrad (19) eines Getriebes in Eingriff mit jeweils einem als Zahnstange ausgebildeten, feststehenden Bauteil (21) steht, dass die Zahnstange (21) an einem Abschnitt (7b) des Bodens (7) der Karosserie (8) des Fahrzeuges (9) angeordnet ist und dass die Verstellvorrichtung (15, 27) durch die Schwenkbewegung der Rückenlehne gleichzeitig die Höhe des hinteren Endes der Sitzfläche (4) verändert.

2. Fahrzeug nach Anspruch 1,
**dadurch gekennzeichnet, dass** ein vorderes Ende (11) der Sitzfläche (4) über eine Führung (12) in vertikaler Richtung (z) geführt ist.

3. Fahrzeug nach einem der vorhergehenden Ansprüche,
**dadurch gekennzeichnet, dass** eine Verriegelungsvorrichtung vorgesehen ist, durch die die Sitzfläche (4) und die Rückenlehne (2) in der Sitzposition (5) verriegelt ist und dass beim Verlagern der Rückenlehne(2) und der Sitzfläche (4) in die abgesenkte Ladeposition (25) eine Entriegelung zumindest des vorderen Endes (11) der Sitzfläche (4) über eine durch die Bewegung der Rückenlehne (2) gesteuerte Vorrichtung erfolgt, so dass die Entriegelung zwangsweise erfolgt, und dass beim Zurückklappen der Rückenlehne (2) aus der Ladeposition (25) in die Sitzposition (5) automatisch eine Verriegelung der Rückenlehne (2) und der Sitzfläche (4) beim Erreichen der Sitzposition (5) erfolgt.

4. Fahrzeug nach einem der vorhergehenden Ansprüche,
**dadurch gekennzeichnet, dass** eine Drehachse (17) des Zahnrades (19) der Verstellvorrichtung (15) die einzige Drehachse (17) ist und dass die Drehachse (17) an einem unteren Ende (16) der Rückenlehne (2) ausgebildet ist, die in Höhe der Sitzfläche (4) liegt.

5. Fahrzeug nach den Ansprüchen 1 bis 3,
**dadurch gekennzeichnet, dass** eine Drehachse (17) des Zahnrades (19) der Verstellvorrichtung (27) an einem hinteren Ende (13) der Sitzfläche (4) ausgebildet ist, dass eine zweite Schwenkachse (30) an einem unteren Ende (16) der Rückenlehne (2) vorgesehen ist und dass die Drehachse (17) und die Schwenkachse (30) um einen Betrag (b) in vertikaler Richtung (z) voneinander beabstandet sind.

6. Fahrzeug nach Anspruch 5,
**dadurch gekennzeichnet, dass** der Abstand (b) zwischen der Drehachse (17) und der Schwenkachse (30) so bemessen ist, dass die Rückseite (22) der Rückenlehne (2) in der Ladeposition (25) eine ebene Ladefläche mit dem sich an den Sitz (1) anschließenden Ladeboden (23) ergibt.

## Claims

1. A vehicle (9) with at least one rear seat (1), which has a backrest (2) and a seat surface (4), wherein the backrest (2) and the seat surface (4) can be adjusted by means of an adjusting device (15, 27) from a sitting position (5) into a loading position (25) and back, one rear side (22) of the backrest (2) being usable as a loading surface and a gap (10) being formed between the seat surface (4) and a base (7) of a body (8) of the vehicle (9),
**characterised in that** the backrest (2) is foldably connected to a rear end (13) of the seat surface (4) by means of an adjusting device (15), **in that** the adjusting device (15) is arranged at a lower end (16) of the backrest (2), **in that** the adjusting device (15, 27) is in engagement with a fixed component (21) configured as a toothed rack, in each case, by means of at least one rotatable toothed wheel (19) of a gearing, **in that** the toothed rack (21) is arranged on a section (7b) of the base (7) of the body (8) of the vehicle (9) and **in that** by means of the pivoting movement of the backrest, the adjusting device (15, 27) simultaneously changes the height of the rear end of the seat surface (4).

2. A vehicle according to claim 1,
**characterised in that** a front end (11) of the seat surface (4) is guided in the vertical direction (z) by means of a guide (12).

3. A vehicle according to any one of the preceding claims,
**characterised in that** a locking device is provided, by means of which the seat surface (4) and the backrest (2) are locked in the sitting position (5) and **in that** when displacing the backrest (2) and the seat surface (4) into the lowered loading position (25), an unlocking at least of the front end (11) of the seat surface (4) takes place by means of a device controlled by the movement of the backrest (2), so that the unlocking inevitably takes place, and **in that** when folding back the backrest (2) from the loading position (25) into the sitting position (5), a locking of the backrest (2) and the seat surface (4) automatically takes place on reaching the sitting position (5).

4. A vehicle according to any one of the preceding claims,
**characterised in that** a rotational axis (17) of the toothed wheel (19) of the adjusting device (15) is the only rotational axis (17) and **in that** the rotational axis (17) is formed at a lower end (16) of the backrest (2), which lies at the level of the seat surface (4).

5. A vehicle according to any one of claims 1 to 3,
**characterised in that** a rotational axis (17) of the toothed wheel (19) of the adjusting device (27) is formed at a rear end (13) of the seat surface (4), **in that** a second pivot axis (30) is provided at a lower end (16) of the backrest (2) and **in that** the rotational axis (17) and pivot axis (30) are spaced apart from one another in the vertical direction (z) by an amount (b).

6. A vehicle according to claim 5,
**characterised in that** the spacing (b) between the rotational axis (17) and the pivot axis (30) is dimensioned such that the rear (22) of the backrest (2) in the loading position (25) produces a level loading surface with the loading base (23) adjoining the seat (1).

## Revendications

1. Véhicule (9) ayant au moins un siège arrière (1) muni d'un dossier (2) et d'une assise (4), le dossier (2) et l'assise (4) étant montés réglables par un dispositif de réglage (15, 27) à partir d'une position d'assise (5) dans une position de chargement (25) et inversement,
le côté arrière (22) du dossier (2) s'utilisant comme surface de chargement, et
un espace intermédiaire (10) est prévu entre la surface d'assise (4) et le plancher (7) de la carrosserie (8) du véhicule automobile (9),
**caractérisé en ce que**
le dossier (2) est rabattable à l'extrémité arrière (13) de l'assise (4), par un dispositif de réglage (15),
le dispositif de réglage (15) se trouvent à l'extrémité inférieure (16) du dossier (2),
le dispositif de réglage (15, 27) est en prise par au moins un pignon denté (19) rotatif d'une transmission avec chaque fois un composant fixe (21) en forme de crémaillère,
la crémaillère (21) est prévue sur un segment (7b) du plancher (7) de la carrosserie (8) du véhicule (9), et
le dispositif de réglage (15, 27) modifie simultanément la hauteur de l'extrémité arrière de l'assise (4) par le mouvement de pivotement du dossier.

2. Véhicule selon la revendication 1,
**caractérisé en ce que**
l'extrémité avant (11) de l'assise (4) est guidée dans la direction verticale (z) par un moyen de guidage (12).

3. Véhicule selon l'une des revendications précédentes,
**caractérisé en ce qu'**
un dispositif de verrouillage verrouille l'assise (4) et le dossier (2) en position d'assise (5), et
lors du déplacement du dossier (2) et de l'assise (4) en position de chargement abaissée (25), au moins de l'extrémité avant (11) de l'assise (4) se déverrouille par un dispositif commandé par le mouvement du dossier (2) afin que le déverrouillage soit forcé, et
lors du basculement en retour du dossier (2) à partir de la position de chargement (25) dans la position d'assise (5), il y a automatiquement verrouillage du dossier (2) et de l'assise (4) lorsque la position d'assise (5) est atteinte.

4. Véhicule selon l'une des revendications précédentes,
**caractérisé en ce qu'**
un axe de rotation (17) du pignon denté (19) du dispositif de réglage (15) constitue l'unique axe de rotation (17) situé à l'extrémité inférieure (16) du dossier (2) se trouvant à la hauteur de l'assise (4).

5. Véhicule selon les revendications 1 à 3,
**caractérisé en ce qu'**
un axe de rotation (17) du pignon denté (19) du dispositif de réglage (27) est prévu à l'extrémité arrière (13) de l'assise (4),
un second axe de pivotement (30) est prévu à l'extrémité inférieure (16) du dossier (2), et
l'axe de rotation (17) et l'axe de pivotement (30) sont écartés l'un de l'autre de la distance (b) dans la direction verticale (z).

6. Véhicule selon la revendication 5,
**caractérisé en ce que**
la distance (b) entre l'axe de rotation (17) et l'axe de pivotement (30) est dimensionnée pour que le côté arrière (22) du dossier (2) en position de chargement (25) forme une surface de chargement plane avec le plancher de chargement (23) adjacent au siège (1).
